# EUROPEAN PATENT SPECIFICATION

(11) **EP 3 375 709 B1**
(45) Date of publication and mention of the grant of the patent: **30.10.2019**
(21) Application number: 17161567.7
(22) Date of filing: 17.03.2017
(51) Int. Cl.: B64C 25/34

(54) **AIRCRAFT LANDING GEAR ASSEMBLY**
FLUGZEUGFAHRWERKBAUGRUPPE
ENSEMBLE DE TRAIN D'ATTERRISSAGE D'AVION

(43) Date of publication of application: 19.09.2018
(73) Proprietor: Safran Landing Systems UK Ltd, Gloucester, Gloucestershire GL2 9QH (GB)
(72) Inventor: Parente, Daniele, Gloucester Gloucestershire, GL2 9QH (GB); Urbani, Andrea, Gloucester Gloucestershire, GL2 9QH (GB)
(74) Representative: Latham, Stuart Alexander

(56) References cited:
- EP-A1- 2 857 310
- EP-A1- 3 009 348
- WO-A2-2006/071263
- US-A- 2 502 522
- US-A1- 2015 151 835

## Description

### Background

A typical arrangement of an aircraft landing gear includes a telescopic shock absorbing strut having an upper joint for pivotal coupling to an aircraft and a lower joint for coupling to a bogie beam or axle.

A shock absorbing strut typically has an outer cylinder within which a piston of a sliding tube is slidably housed to enable the sliding tube to move axially relative to the outer cylinder between an extended condition and compressed condition.

Both the inner surface of the outer cylinder and the outer surface of the sliding tube piston typically have circular profiles. As such, a set of torque links are provided to provide a mechanical coupling between the outer cylinder and the sliding tube to inhibit relative rotation between them about the shock absorber travel axis.

EP 3009348 shows a relevant prior art aircraft landing gear assembly.

The present inventors have identified that the weight of an aircraft landing gear can be reduced.

### Summary

In accordance with a first aspect of the present invention, there is provided an aircraft landing gear assembly comprising:a shock absorbing strut comprising:an outer cylinder; anda sliding tube slidably coupled within the outer cylinder and arranged to move relative to the outer cylinder along a shock absorber travel axis between a first position in which the shock absorbing strut is in an extended condition and a second position in which the shock absorbing strut is in a compressed condition; a bogie beam pivotally coupled to a first one of the outer cylinder and the sliding tube via a bogie pivot pin; and
a set of torque links arranged to inhibit rotation of the sliding tube relative to the outer cylinder about the shock absorber travel axis, the torque links comprising a first torque link movably coupled to a second torque link, the first torque link being movably coupled to a second one of the outer cylinder and the sliding tube which is distinct from the first one of the outer cylinder and the sliding tube and the second torque link including a coupling formation via which it is movably attached to the bogie pivot pin.

Thus, an aircraft landing gear assembly according to the first aspect of the invention utilises the bogie pivot pin as an attachment point for the lower torque link. This removes the need for a dedicated attachment point, such as a set of reinforced lugs, on the sliding tube or bogie beam, as well as the associated fittings such as bushes, pivot pin and caps. Although this approach requires at least one of the upper and lower torque links to be longer than known arrangements, the present inventors have found that it can lead to a reduced weight landing gear assembly.

The set of torque links can be symmetrical about a plane which is parallel with respect to, and can intersect, the shock absorber travel axis. The present inventors have identified that such an arrangement can provide improved clearance, due to the torque link being the same size and shape either side of the plane of symmetry, which is particularly advantageous when the bogie pivot pin is used as the attachment point for the second torque link. Such an arrangement can provide equal load distribution within the torque link.

The first torque link can be pivotally coupled to the second torque link via an apex pin joint.

The first torque link can be in the form of a wishbone with first and second arm portions extending away from an apex joint mounting lug. The second torque link can be in the form of a wishbone with first and second arm portions extending away from a pair of parallel apex joint mounting lugs (clevis) which define a space between them for receiving the apex joint mounting lug of the first torque link, each mounting lug having a transverse hole arranged to receive a common apex pin in order to define the apex pin joint.

The second torque link can be longer than the first torque link. This can result in an arrangement in which the internal angle between the first and second links is less than or equal to 135°.

It is preferred that the arms of the second torque link are longer than the arms of the first torque link. This can provide improved clearance for the bogie beam.

The central portion of the second torque link, between the arms, can include a recess that is sized and shaped to accommodate a portion of the bogie beam when the shock absorber strut is in the compressed condition.

The first torque link can be pivotally coupled to the second one of the outer cylinder and the sliding tube via a pin joint.

The first torque link can be coupled to the second torque link for relative movement constrained within a movement plane.

In accordance with a second aspect of the invention, there is provided an aircraft including one or more landing gear according to the first aspect.

### Brief Description of the Drawings

By way of example only, certain embodiments of the invention will now be described by reference to the accompanying drawings, in which:
FIG. 1 is a schematic diagram of a known aircraft landing gear assembly;
FIG. 2 is a schematic diagram of part of an aircraft landing gear assembly according to an embodiment of the invention;
FIG. 3 is a side view of the bogie beam of the aircraft landing gear assembly of FIG 2; and
FIG. 4 is a section view through A-A of the bogie beam of FIG 3.

### Detailed Description

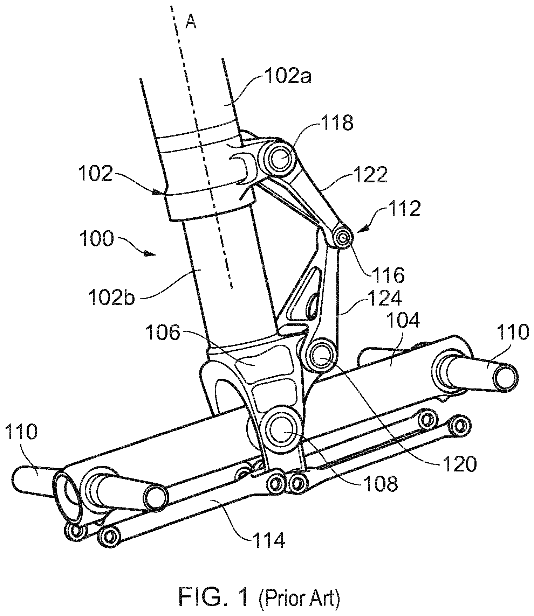

Referring to FIG 1, part of an aircraft is shown. More specifically, a known aircraft landing gear assembly is shown generally at 100.

The landing gear assembly 100 comprises a shock absorber strut 102 that is arranged to be coupled to an aircraft at a first, upper, end (not shown) and operated to be stowed or deployed in a conventional manner. At the second, lower, end of the shock absorber strut 102 the strut is pivotally coupled to a bogie beam 104. A typical arrangement of the lower end of the sliding tube of the shock absorber strut 102 includes a forked yoke 106 extending either side and below the bogie beam 104. A bogie pivot pin 108 pivotally couples the bogie beam 104 to the yoke 106. The bogie beam 104 generally includes two or more axles 110 on which aircraft wheel and brake assemblies (not shown) are mounted. Brake rods 114 are provided to couple each brake assembly to a lower extension of the yoke 106 in order to react brake torque.

The shock absorber strut 102 has outer cylinder 102a, also referred to as a "main fitting". A first end of a cylindrical second body 102b known in the art as a "piston" or "sliding tube" is slidably coupled within a bore, formed within the first body 102a to enable the sliding tube 102b to move axially relative to the main fitting 102a between an extended condition and compressed condition. A second end of the second body 102b, which is disposed outside of the first body 102a, is coupled to the bogie beam 104 via the bogie pivot pin 108. Alternatively, the shock absorber can be housed within a separate structural housing which defined the main fitting.

A set of torque links 112 couple the sliding tube 102b to the main fitting 102a to inhibit axial rotation about travel axis A between the main fitting 102a and the sliding tube 104b when a torsion load is applied to one of them. The torque links 112 comprise an upper torque link 122 pivotally coupled to a lower torque link 124 via an apex pin joint 116. The upper torque link 122 is pivotally coupled to the main fitting 102a via a pin joint 118 defined by a pair of mounting lugs formed on the main fitting 102a. The lower torque link 124 is pivotally coupled to the sliding tube 102b via a pin joint 120 defined by a pair of mounting lugs 120 formed on the slider yoke 106. Alternatively, the lower torque link can be pivotally coupled to the bogie beam via a pin joint defined by a pair of mounting lugs formed on the bogie beam. As the shock absorbing strut 102 extends and compresses the torque links 112 pivot relative to one another about the apex joint 116.

The present inventors have identified that the mass of known landing gear assemblies can be reduced.

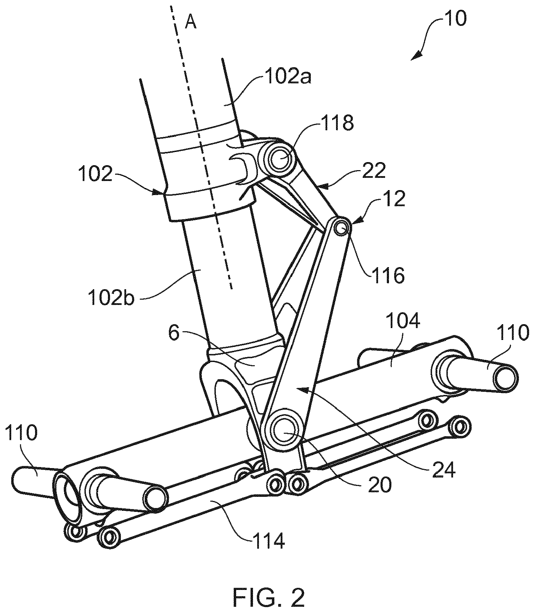

FIG. 2 shows an aircraft landing gear assembly according to an embodiment of the invention generally at 10. The landing gear assembly 10 is similar to the known landing gear assembly and for brevity the following description will focus on the differences. Like parts have been given the same reference numerals.

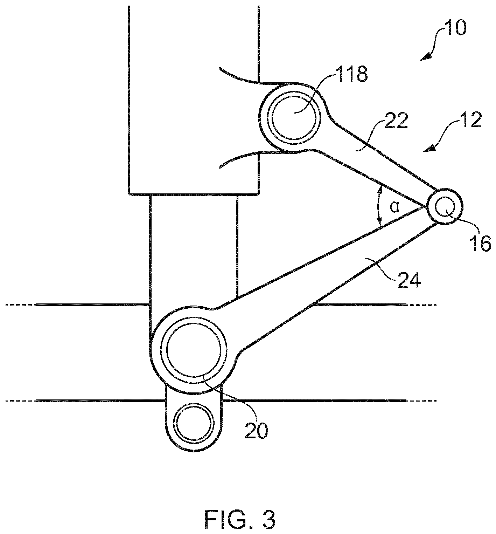

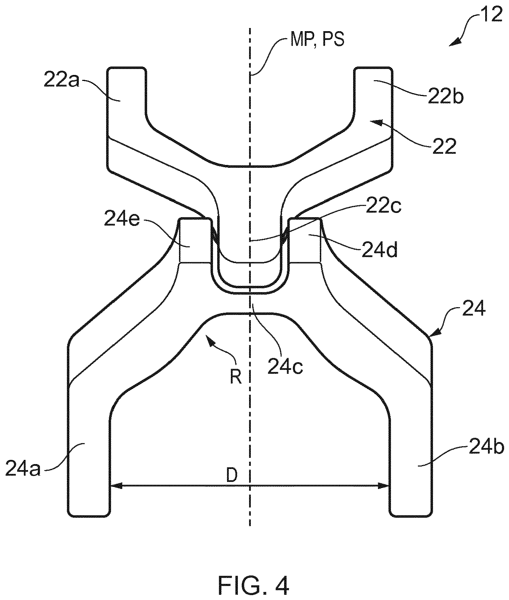

Referring additionally to FIGS. 3 and 4, the landing gear assembly 10 includes a set of torque links 12 in which the lower torque link 24 is arranged to be coupled to the bogie pivot pin 20 for pivotal movement about the central axis of the bogie pivot pin 20. The torque links 12 comprise an upper torque link 22 pivotally coupled to a lower torque link 24 via an apex pin joint 16 for relative movement constrained within a movement plane MP.

The bogie pivot pint can be the same as the bogie pivot pin 108 of FIG. 1, or can be lengthened to provide a wider attachment area.

In this embodiment the upper torque link 22 is pivotally coupled to the main fitting 102a via the pin joint 118 of FIG. 1, but can take any suitable form and be coupled to the main fitting in any suitable manner that enables the torque links 12 to inhibit relative rotation between the main fitting 102a and sliding tube 102b while permitting expansion and compression of the shock absorbing strut 102.

The upper torque link 22 is formed as a wishbone shaped member having first and second parallel arms 22a, 22b joined together at a central region from which a connection lug 22c extends away from the first and second parallel arms 22a, 22b in a generally parallel arrangement.

The lower torque link 24 is also formed as a wishbone shaped member having first and second parallel arms 24a, 24b connected via a central region 24c from which a pair of connection lugs 24d, 24e extend away from the first and second parallel arms 24a, 24b in a generally parallel arrangement to define a clevis.

Each connection lug 22c, 24d, 24e is provided with a transverse hole arranged to receive a common pin 16 such that the lug 22c can be inserted into the space between the 24d, 24e and the pin 16 inserted to define an apex pin joint.

The distance D between the lower torque link arms 24a, 24b is sized to accommodate the yoke 6 of the sliding tube 102b. The distance D between the arms is generally defined according to the size of the sliding piston yoke, which is dimensioned according to the required bearing area and able to accommodate the bogie beam. In one example, the distance D can be 550 mm to 600 mm for a large commercial aircraft.

The lower torque link 24 includes a curved recess R sized to receive an upper portion of the bogie beam 104 when the shock absorber strut 102 is in a fully compressed condition. The size and shape of the recessed section R will depend on size and shape of the bogie beam 104, the length and shape of the arms 24a, 24b, as well as factors such as minimum clearance requirement between landing gear components.

The lower torque link 24 is in this embodiment longer than the upper torque link 22. This can result in an arrangement in which the internal angle α between the upper and lower links is less than or equal to 135°, which can be advantageous from a design perspective.

In other embodiments the torque links can take any suitable form in which they are directly coupled to the bogie pivot pin at the lower end and are directly or indirectly coupled to the main fitting at an upper end so as to inhibit axial rotation between the main fitting and sliding tube.

In embodiments of the invention it is preferred that the set of torque links are symmetrical about a central movement plane PS, which is preferably parallel with respect to and intersects the shock absorber travel axis A. The present inventors have identified that such an arrangement can provide improved clearance, due to the torque link being the same size either side of the plane of symmetry, which is particularly advantageous when the bogie pivot pin is used as the attachment point for the second torque link. Such an arrangement can provide equal load distribution within the torque link.

The landing gear assembly according to embodiments of the invention may be a main landing gear assembly.

Aircraft landing gear according to embodiments of the invention can be of reduced mass in comparison to known landing gear because there is no requirement for dedicated lug(s) to be provided to define the lower torque link attachment point. While it has been necessary to increase the length of the parallel arms of the lower torque link, the inventors have found that the mass associated with this is less than the mass associated with a pair of dedicated lower torque link attachment lugs.

It should be noted that the above-mentioned embodiments illustrate rather than limit the invention, and that those skilled in the art will be capable of designing many alternative embodiments without departing from the scope of the invention as defined by the appended claims.

## Claims

1. An aircraft landing gear assembly (10) comprising:
a shock absorbing strut (102) comprising:
an outer cylinder (102a); and
a sliding tube (102b) slidably coupled within the outer cylinder and arranged to move relative to the outer cylinder along a shock absorber travel axis (A) between a first position in which the shock absorbing strut is in an extended condition and a second position in which the shock absorbing strut is in a compressed condition;
a bogie beam (104) pivotally coupled to a first one of the outer cylinder and the sliding tube via a bogie pivot pin (20); and
a set of torque links (12) arranged to inhibit rotation of the sliding tube relative to the outer cylinder about the shock absorber travel axis, the torque links comprising:
a first torque link (22); and
a second torque link (24) movably coupled to the first torque link,
wherein the first torque link is movably coupled to a second one of the outer cylinder and the sliding tube, which is distinct from the first one of the outer cylinder and the sliding tube;
**characterised in that** the second torque link is pivotally coupled to the bogie pivot pin to pivot about the bogie pivot pin.

2. An aircraft landing gear assembly according to claim 1, wherein the set of torque links is symmetrical about a plane (PS) which is parallel with respect to and intersects the shock absorber travel axis (A).

3. An aircraft landing gear assembly according to any preceding claim, wherein the first torque link is pivotally coupled to the second torque link via an apex pin joint (16).

4. An aircraft landing gear assembly according to any preceding claim, wherein the first torque link (22) is in the form of a wishbone with first and second arm portions (22a, 22b) extending away from an apex joint mounting lug (22c), the second torque link (24) is in the form of a wishbone with first and second arm portions (24a, 24b) extending away from a pair of parallel apex joint mounting lugs (24d, 24e) which define a space between them for receiving the apex joint mounting lug of the first torque link, each mounting lug having a transverse hole arranged to receive a common apex pin (16) in order to define the apex pin joint.

5. An aircraft landing gear assembly according to any preceding claim, wherein the second torque link is longer than the first torque link.

6. An aircraft landing gear assembly according to any preceding claim, wherein the arms of the second torque link are longer than the arms of the first torque link.

7. An aircraft landing gear assembly according to any preceding claim when dependent on claim 4, wherein the central portion of the second torque link, between the arms, includes a recess (R) that is sized and shaped to accommodate a portion of the bogie beam when the shock absorber strut is in the compressed condition.

8. An aircraft landing gear assembly according to any preceding claim, wherein the first torque link is pivotally coupled to the second one of the outer cylinder and the sliding tube via a pin joint.

9. An aircraft landing gear assembly according to any preceding claim, wherein the first torque link is coupled to the second torque link for relative movement within a movement plane (MP).

10. An aircraft including one or more landing gear assemblies according to any preceding claim.

## Patentansprüche

1. Flugzeugfahrwerkanordnung (10), umfassend:
ein Federbein (102), umfassend:
einen äußeren Zylinder (102a);
und ein Gleitrohr (102b), das beweglich innerhalb des äußeren Zylinders gekoppelt und angeordnet ist, um sich relativ zu dem äußeren Zylinder entlang einer Federbein-Wegachse (A) zwischen einer ersten Position, in der sich das Federbein in einem ausgefahrenen Zustand und einer zweiten Position, in der sich das Federbein in einem eingefahrenen Zustand befindet, zu bewegen; einen Drehgestellträger (104), der drehbar mit einem ersten der äußeren Zylinder und dem Gleitrohr über einen Drehgestelldrehbolzen (20) gekoppelt ist; und
einen Satz Drehmomentverbindungen (12), die angeordnet sind, um die Drehung des Gleitrohres in Bezug auf den äußeren Zylinder um die Federbein-Wegachse zu verhindern, die Drehmomentverbindungen umfassen:
eine erste Drehmomentverbindung (22); und
eine zweite Drehmomentverbindung (24), die beweglich mit der ersten Drehmomentverbindung gekoppelt ist,
wobei die erste Drehmomentverbindung beweglich mit einem zweiten des äußeren Zylinders und dem Gleitrohr gekoppelt ist, das sich von dem ersten des äußeren Zylinders und dem Gleitrohr unterscheidet.
**dadurch gekennzeichnet, dass** die zweite Drehmomentverbindung drehbar mit dem Drehgestell-Stiftgelenk gekoppelt ist, um um das Drehgestell-Stiftgelenk zu drehen.

2. Flugzeugfahrwerkanordnung nach Anspruch 1, wobei der Satz von Drehmomentverbindungen symmetrisch um eine Ebene (PS) ist, die parallel zu der Federbein-Wegachse (A) ist und diese schneidet.

3. Flugzeugfahrwerkanordnung nach einem vorhergehenden Anspruch, wobei die erste Drehmomentverbindung über ein Apex-Stiftgelenk (16) drehbar mit der zweiten Drehmomentverbindung gekoppelt.

4. Flugzeugfahrwerkanordnung nach einem vorhergehenden Anspruch, wobei die erste Drehmomentverbindung (22) in Form eines Querlenkers mit ersten und zweiten Armabschnitten (22a, 22b) ausgebildet ist, die sich von einer Apex-Gelenkbefestigungslasche (22c) weg erstrecken, die zweite Drehmomentverbindung (24) ist in Form eines Querlenkers mit ersten und zweiten Armabschnitten (24a, 24b) ausgebildet, die sich von einem Paar paralleler Apex-Gelenkbefestigungslaschen (24d, 24e), weg erstrecken, die einen Raum für das Aufnehmen der Apex-Gelenkbefestigungslasche der ersten Drehmomentverbindung zwischen sich definieren, jede Befestigungslasche weist ein Querloch auf, das zum Aufnehmen eines gemeinsamen Apex-Stifts (16) ausgestaltet ist, um das Apex-Stiftgelenk zu definieren.

5. Flugzeugfahrwerkanordnung nach einem vorhergehenden Anspruch, wobei die zweite Drehmomentverbindung länger ist als die erste Drehmomentverbindung.

6. Flugzeugfahrwerkanordnung nach einem vorhergehenden Anspruch, wobei die Arme der zweiten Drehmomentverbindung länger sind als die Arme der ersten Drehmomentverbindung.

7. Flugzeugfahrwerkanordnung nach einem vorhergehenden Anspruch, soweit er von Anspruch 4 abhängig ist, wobei der zentrale Abschnitt der zweiten Drehmomentverbindung zwischen den Armen eine Aussparung (R) beinhaltet, die bemessen und geformt ist, um einen Teil des Drehgestellträgers aufzunehmen, wenn sich das Federbein im eingefahrenen Zustand befindet.

8. Flugzeugfahrwerkanordnung nach einem vorhergehenden Anspruch, wobei die erste Drehmomentverbindung drehbar mit dem zweiten des äußeren Zylinders und dem Gleitrohr über ein Stiftgelenk gekoppelt.

9. Flugzeugfahrwerkanordnung nach einem vorhergehenden Anspruch, wobei die erste Drehmomentverbindung mit der zweiten Drehmomentverbindung für eine Relativbewegung innerhalb einer Bewegungsebene (MP) gekoppelt ist.

10. Flugzeug mit einer oder mehreren Fahrwerkanordnungen nach einem vorhergehenden Anspruch.

## Revendications

1. Un ensemble de train d'atterrissage d'avion (10) comprenant :
un amortisseur de train (102)
un vérin extérieur (102a) ; et
un tube coulissant (102b) couplé en coulissement à l'intérieur du vérin extérieur et disposé pour se déplacer par rapport au cylindre extérieur le long d'un axe de déplacement de l'amortisseur (A) entre une première position dans laquelle l'amortisseur se trouve en état étendu et une seconde position dans laquelle l'amortisseur se trouve en état de compression ;
un balancier de bogie(104) couplé en pivotement à un premier desdits vérin extérieur et tube coulissant via un axe de pivotement de bogie (20) ; et
un ensemble de compas (12) disposé pour empêcher la rotation du tube coulissant par rapport au vérin extérieur autour de l'axe de déplacement de l'amortisseur, les compas comprenant :
un premier compas (22) ; et
un second compas (24) couplé de manière mobile au premier compas,
dans lequel le premier compas est couplé de manière mobile à un second desdits vérin extérieur et tube coulissant, qui est distinct du premier desdits vérin extérieur et du tube coulissant ;
**caractérisé en ce que** le second compas est couplé en pivotement à l'axe de pivotement du bogie pour pivoter autour de l'axe de pivotement du bogie.

2. Un ensemble de train d'atterrissage d'avion selon la revendication 1, dans lequel l'ensemble de compas est symétrique autour d'un plan (PS) qui est parallèle par rapport à l'axe de déplacement de l'amortisseur (A) et qui le coupe.

3. Un ensemble de train d'atterrissage d'avion selon l'une quelconque des revendications précédentes, dans lequel le premier compas est couplé en pivotement au second compas par une articulation cylindrique d'apex (16).

4. Un ensemble de train d'atterrissage d'avion selon l'une quelconque des revendications précédentes, dans lequel le premier compas (22) se présente sous la forme d'un bras triangulaire avec une première et une seconde parties de bras (22a, 22b) s'étendant à partir d'une patte de montage d'articulation d'apex (22c), le second compas (24) se présente sous la forme d'un bras triangulaire avec une première et une seconde parties de bras (24a, 24b) s'étendant à partir d'une paire de pattes de montage d'articulation d'apex parallèles (24d, 24e) qui définissent un espace entre elles pour recevoir la patte de montage d'articulation d'apex du premier compas, chaque patte de montage ayant un trou transversal disposé pour recevoir un axe d'articulation d'apex commun (16) de manière à définir l'articulation d'apex.

5. Un ensemble de train d'atterrissage d'avion selon l'une quelconque des revendications précédentes, dans lequel le second compas est plus long que le premier compas.

6. Un ensemble de train d'atterrissage d'avion selon l'une quelconque des revendications précédentes, dans lequel les bras du second compas sont plus longs que les bras du premier compas.

7. Un ensemble de train d'atterrissage d'avion selon l'une quelconque des revendications précédentes lorsqu'elles dépendent de la revendication 4, dans lequel la partie centrale du second compas, entre les bras, inclut un évidement (R) qui est dimensionné et formé pour recevoir une partie du balancier de bogie lorsque l'amortissement se trouve en état de compression.

8. Un ensemble de train d'atterrissage d'avion selon l'une quelconque des revendications précédentes, dans lequel le premier compas est couplé en pivotement au second desdits vérin extérieur et tube coulissant par un axe d'articulation cylindrique.

9. Un ensemble de train d'atterrissage d'avion selon l'une quelconque des revendications précédentes dans lequel le premier compas est couplé au second compas pour assurer un mouvement relatif à l'intérieur d'un plan de mouvement (MP).

10. Avion incluant ou plusieurs ensemble(s) de train d'atterrissage selon l'une quelconque des revendications précédentes.
